# EUROPEAN PATENT APPLICATION

(11) **EP 4 707 581 A2**
(43) Date of publication of application: **11.03.2026**
(21) Application number: 26151379.0
(22) Date of filing: 12.11.2022
(51) Int. Cl.: F03B 13/18

(54) **A ROTATABLE BUOY FOR A WAVE ENERGY CONVERTER TO PROVIDE INCREASED ENERGY CAPTURE**

(30) Priority: 13.11.2021 IE S20210189
(62) Divisional of application: 22838987.0
(71) Applicant: WALL, Brian, Co. Cork P75YX84 (IE)
(72) Inventor: WALL, Brian, Co. Cork P75YX84 (IE)

(57) **Abstract**

The present invention relates to the use of marine devices for ocean energy extraction.

The invention provides for a rotatable buoy (2) that uses aligned vanes (133) to keep the buoy (2) oriented parallel with the wave front to enable the use of longer buoys (2), and therefore larger buoys (2), to increase energy capture for a wave energy converter.

## Description

### Field of Invention

The present invention relates to the use of devices to exploit the energy in ocean waves, and more particularly to the scaling up of energy capture from ocean waves.

### Background to the Invention

Tackling climate change requires clean renewable sources of energy. Waves carry large amounts of energy across oceans in a steady manner. However, the sea is a difficult, dangerous, and expensive place in which to work. To successfully harness the energy in waves, a device must produce more power than is used in manufacture, deployment, operation, maintenance, product delivery, and replacement. The sequential nature of waves limits the scaling up of devices to deliver more power for single point wave energy converters.

Relevant background art in this field is described in:
US4364691 (Wirt Leslie S.) 27.06.1980
US 6715958 B2 (Dan Wittenberg and Mac McCallum) 29.7.2002
WO2009131461 (Sirseth, Thorbjøm.) 24.04.2008
US20220381216 (R. Bado, A. Madatov) 27.05.2021
CA2271021 (Denniss, T.) 14.11.1996 AU
Applicant's own patent, WO2023084506 (WALL, Brian (IE) 13/11/2021) from which the present application is a divisional application.

### Technical problem to be solved

The objective of this invention is to provide a float design that allows for enlargement of floats to provide increased energy capture.

### Disclosure of the Invention

A single-point wave energy converter is a device that is configured to capture the maximum energy available from waves and includes the body of the apparatus, which is a buoyant floatation component, which during operation is held below the sea surface by moorings.

The floatation component supports a buoy, or buoyant moving component, that is free to move vertically relative to the floatation component. The buoy, or buoyant moving component, includes a float which provides buoyancy, and which is attached to a shaft or rod.

The shaft extends into the floatation component where it engages with a power take-off mechanism that is configured to convert wave motion into useful products.

The shaft is free to move vertically within the power take-off mechanism.

The buoy or buoyant moving component is free to rotate relative to the floatation component.

The buoy or buoyant moving component is wider than the upper part of the floatation component and supports one or more barriers to water movement, such as vanes or blades, that extend sufficiently deep from the buoyant moving component to be always partly or fully submerged below the sea-surface.

The advantage of the present invention is that it overcomes the limitation caused by the sequential nature of waves by providing a float shape that can be lengthened parallel to the wave front, and kept parallel to the wave front, thereby providing the capacity to scale-up energy conversion for wave energy devices.

In one embodiment the barriers to water movement that are supported by the buoy, or buoyant moving component, are orientation vanes, blades, or rudders that are aligned and extend deep enough to be always at least partly submerged below the water surface.

In one embodiment the barriers to water movement extend down from the base of the float.

In one embodiment the barriers to water movement are connected to a float frame or support structure that also supports the float. The float frame is fixed to the shaft, and is shaped for minimum wind-resistance, and maximum strength and extends farther than the outer edge of the floatation component, the body of the apparatus.

In one embodiment, the shaft is free to rotate within the body of the floatation component.

In one embodiment the float is coupled to the shaft with a swivel connection or rotary linkage or rotating coupling that allows the float to swivel, rotate or pivot relative to the shaft.

In one embodiment, the apparatus includes mechanisms that facilitate movement and minimise friction between components, including bearings and flanges, the shaft being in contact with the structure of the floatation component via bearings.

In one embodiment, the shaft is also supported by a flange, that is in contact with the structure of the floatation component and is in contact with the shaft via bearings.

In one embodiment the shaft is free to rotate within the power take-off mechanism.

### A Brief Description of The Drawings

The sole purpose of reference numerals in the following pages is to make the description and claims easier to understand by referring to an element in one possible embodiment of the invention. The reference numerals are not included in the description or the claims to denote that an element of an embodiment that they refer to is the only possible embodiment of that element in the invention.

The invention will be more clearly understood from the following description of some embodiments of the invention, given by way of an example only, with reference to the following diagrammatic drawings.

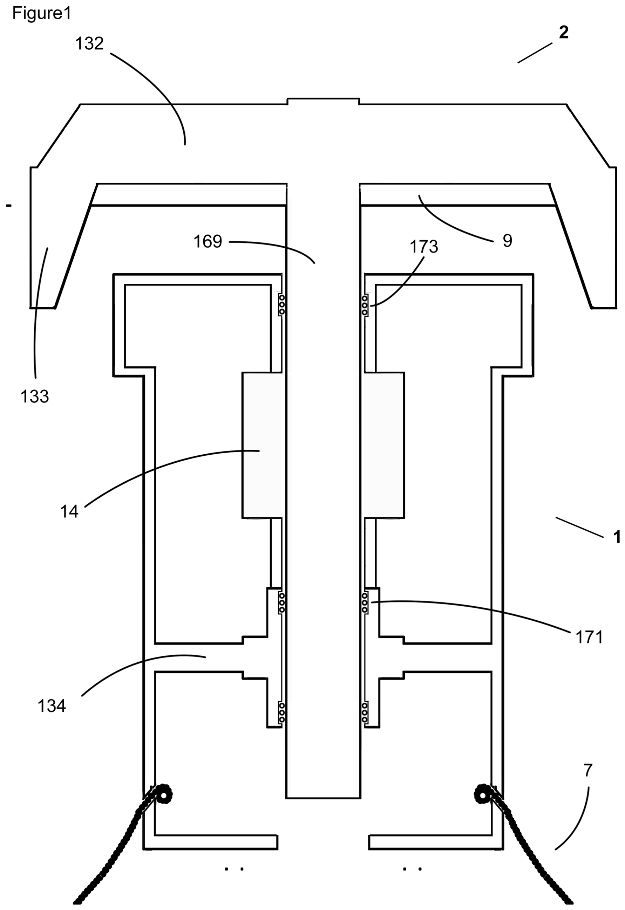

Figure 1 is a cross-section side-view of one embodiment of the invention showing the internal structure of the body of the apparatus, the Floatation Component (1), and the Buoy of the apparatus, or Buoyant Moving Component (2).

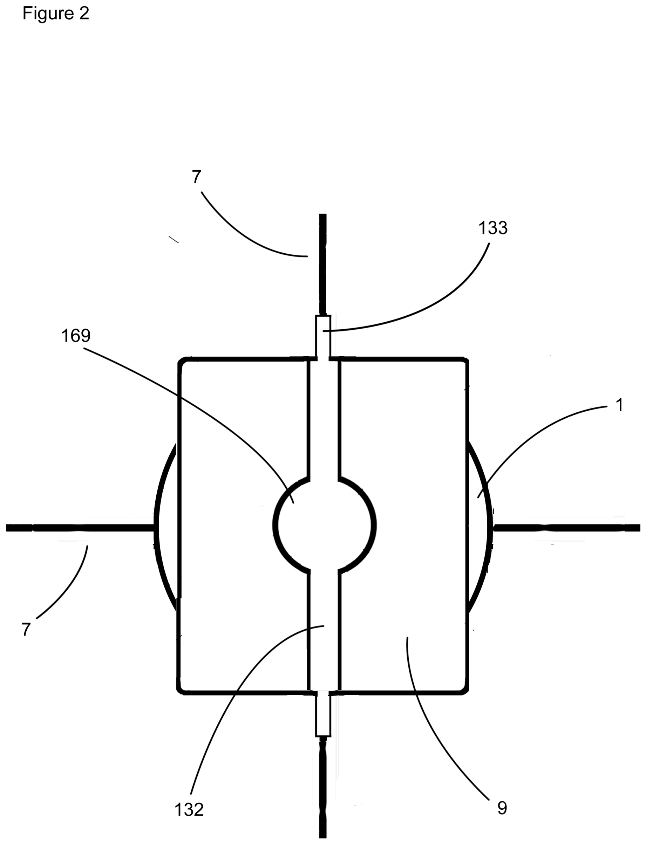

Figure 2 is an external, top-down view of the same embodiment of the invention showing the body of the apparatus, the Floatation Component (1), and the upper parts of the buoy of the apparatus, the Buoyant Moving Component (2) viewed from above the Float (9).

### A Detailed Description of the Drawings

### Figure 1

Shown in a cross-section side-view of one embodiment of the invention are the body of the apparatus, the Floatation Component (1), which provides stable buoyancy for the apparatus, supports the buoy, the Buoyant Moving Component (2), houses the wave energy conversion power take off mechanism (14), and is moored by mooring connections (7).

Also shown is the Buoyant Moving Component (2), which rises and falls relative to the Floatation Component (1) to convert wave motion into useful products.

Forming part of the Buoyant Moving Component (2) is the Float (9), which provides the buoyancy for the Buoyant Moving Component (2) to rise from below, while being sufficiently heavy to descend from above.

Attached to the Float (9) is a Shaft (169), which rises and falls inside, and engages with, the power take-off mechanism (14).

The energy captured from each wave can be increased because the Float (9) can be scaled up to be longer than the width of the Floatation Component (1) and longer than the distance between waves, and can have greater mass and volume, and can therefore travel with greater force and deliver more energy.

This is possible because the Shaft (169) is free to rotate within the body of the floatation component so that the Float (9) can remain parallel to the wavefront.

The movement of the Shaft (169) is facilitated by Shaft Support Flange Inner Bearings (171), which are the contact points between the exterior of the Shaft (169) and a Shaft Support Flange (134), which is a flange supporting the Shaft (169) and is in contact with the structure of the Floatation Component (1).

Also facilitating the movement of the Shaft (169) are the Floatation Component Bearings (173), which are the contact points between the Shaft (169) and the Floatation Component (1).

Though the Shaft (169) is free to rotate, thereby allowing the Float (9) to be longer than the wavelength of the waves, the Float (9) must remain parallel to the wavefront.

To keep the Float (9) parallel to the wave front, a Float Frame (132), which provides support for a longer Float (9), also provides support for Orientation Blades (133), which are vanes that act as barriers to the movement of the water molecules in each wave.

The Orientation Blades (133), the barriers to water movement, extend down deep enough from the base of the Float (9) to be always, at least, partly submerged below the water and always subject to water movement.

### Figure 2

Shown in an external, top-down view from the same embodiment of the invention is the Float (9), the Mooring Connections (7), and the Shaft (169), which connects the Float (9) with the Floatation Component (1).

Connected to the Shaft (169) is the Float Frame (132), which provides structural support for the Float (9), which can be longer than the width of the Floatation Component (1).

At each end of the Float Frame (132) are the Orientation Blades (133), which are barriers to water movement or vanes that keep the Float (9) parallel to the wave-front, and always remain partly submerged.

## Claims

1. A wave energy converter, comprising:
a sub-surface body (1);
a buoy (2) that is disposed above the body (1) and is reciprocally movable along an upright axis relative to the body (1) in response to wave action; and
a shaft (169) that extends downwardly from the buoy (2) into a power take off mechanism (14) within the body (1) and is movable with the buoy (2) along the upright axis to drive reciprocal motion within the power take off mechanism (14) to convert wave energy for industrial uses;
wherein the buoy (2) is rotatable relative to the body (1) about the upright axis,
the buoy (2) comprising one or more barriers to water movement (133), the barriers to water movement (133) being long enough to extend sufficiently deep from the buoy to be always partly or fully submerged below the water-surface.

2. The wave energy converter of Claim 1, wherein at least part of the buoy (2) is wider than the body (1) in a horizontal direction.

3. The wave energy converter of Claim 1 or Claim 2, wherein the buoy (2) is elongate in plan view.

4. The wave energy converter of Claim 1, wherein the buoy (2) is rotatable with the shaft (169) relative to the body (1).

5. The wave energy converter of Claim 1, wherein the buoy (2) is rotatable relative to the shaft (169).

6. The wave energy converter of Claim 1, wherein the barriers to water movement (133) are vanes.

7. The wave energy converter of Claim 1 or Claim 6) wherein the vanes (133) extend down from the base of the float (9).

8. The wave energy converter of Claim 1, wherein the vanes (133) are aligned.

9. The wave energy converter of Claim 1, wherein the vanes (133) are connected to a float frame (132).

10. The wave energy converter of Claim 1 or Claim 9, wherein the float frame (132) is connected to the buoy (2).

11. The wave energy converter of Claim 1, wherein the float frame (132) is connected to, and rotates with, the shaft (169).

12. The wave energy converter of Claim 1, wherein the float frame (132) rotates independently of the shaft (169).
